# EUROPÄISCHE PATENTANMELDUNG

(11) **EP 4 552 988 A1**
(43) Veröffentlichungstag der Anmeldung: **14.05.2025**
(21) Anmeldenummer: 24207412.8
(22) Anmeldetag: 18.10.2024
(51) Int. Cl.: B65D 5/54, B65D 83/08

(54) **BACKPAPIERSPENDER**

(30) Priorität: 08.11.2023 CH 12322023
(71) Anmelder: star foil-systems ag, 8280 Kreuzlingen (CH)
(72) Erfinder: BUCK, Simon, 9322 9322 (CH); FORRER, Beat, 8592 Uttwil (CH)
(74) Vertreter: Frei Patent Attorneys

(57) **Zusammenfassung**

Der Backpapierspender umfasst ein Spendergehäuse (1) mit einer Entnahmeöffnung und einen im Spendergehäuse (1) auf einem Entnahmeboden (19) gelagerten Backpapierstapel (3) aus Backpapierbogen. Angrenzend an die Entnahmeöffnung (17) umfasst das Spendergehäuse (1) eine Anschlagfläche (5) für die Vorderkanten der Backpapierbogen. Diese Anschlagfläche (5) ist unter einem Steigungswinkel (a) relativ zum Entnahmeboden (19) geneigt angeordnet, um die Backpapierbogen aufzufächern, sodass sie einfach durch die Entnahmeöffnung (17) aus dem Spendergehäuse (1) entnommen werden können.

## Beschreibung

Gegenstand der Erfindung ist ein Backpapierspender gemäss den Merkmalen des Patentanspruchs 1.

Backpapierspender umfassen ein Spendergehäuse, in dem Backpapier z.B. als aufgewickeltes Band oder in Form vorgeschnittener, gestapelter Backpapierbogen zur Entnahme aus dem Spendergehäuse bereitgestellt wird.

Für kommerzielle Anwendungszwecke, z.B. in Bäckereien oder Gastrobetrieben, werden in der Regel Backpapierspender verwendet, bei denen vorgeschnittene Backpapierbogen gestapelt und einzeln entnehmbar in einem Spendergehäuse gelagert sind.

Aus der CH700942B1 ist ein Dispenser zum Aufbewahren und Entnehmen von Backpapier bekannt, wobei in einem quaderförmigen Behälter ein oder mehrere Stapel Backpapier gelagert sind, die je um eine stabile Einlage umgeschlagen sind. Der Behälter ist eine Faltschachtel aus Karton oder Wellpappe und umfasst oben angrenzend an die Längskante einer der langen Schmalseiten eine Entnahmeöffnung. Die Backpapierstapel sind so im Behälter gelagert, dass die nicht umgeschlagenen oberen Kanten der Backpapierbogen unterhalb der Entnahmeöffnung benachbart zur an die Entnahmeöffnung angrenzenden langen Schmalseite angeordnet sind. Durch die Entnahmeöffnung können Backpapierbogen vom obersten Stapel aus dem Behälter herausgezogen werden. Da die Backpapierbogen eine haftungshemmende Beschichtung aus Silikon haben, ist es möglich, einzelne Bogen aus dem Behälter herauszuziehen. Die Reibung zwischen benachbarten Bogen eines Stapels ist bei schweren Stapeln mit vielen Bogen grösser als bei kleinen Stapeln mit weniger Bogen. Bei grösseren Stapeln kann dies beim Herausziehen eines Bogens aus dem Behälter bewirken, dass weitere Bogen mitgerissen werden. Um dies zu verhindern, wird vorgeschlagen, im Behälter mehrere durch Trennplatten getrennte Stapel anzuordnen, wobei jeder Stapel um eine individuelle Einlage umgeschlagen ist. Obwohl die Abmessungen solcher Behälter in Längsrichtung der Backpapierbogen nur etwa halb so gross sind wie die Länge der Backpapierbogen, sind solche Backpapierspender immer noch vergleichsweise gross und sperrig, sodass sie am jeweiligen Einsatzort die Nutzung von Arbeitsflächen beeinträchtigen können

Aus der EP4257513A1 ist ein weiterer Backpapierspender bekannt, bei dem ein Stapel Backpapierbogen mindestens zweifach umgeschlagen in einer Faltschachtel aus Karton oder Wellpappe als Behälter gelagert ist, und bei dem die Entnahmeöffnung benachbart zu einem konvexen Umschlagbereich des Stapels angeordnet ist, sodass ein zu entnehmender Backpapierbogen im umgeschlagenen Bereich ergriffen und durch die Entnahmeöffnung aus dem Behälter herausgezogen werden kann. Zumindest auf einer der beiden Längsseiten der Entnahmeöffnung umfasst der Behälter einen Anschlag für die benachbarten Ränder der Backpapierbogen. Beim Ergreifen und Herausziehen des obersten Backpapierbogens in dessen umgeschlagenen Bereich liegen die Ränder der Backpapierbogen an diesem Anschlag an und werden dadurch im Behälter zurückgehalten.

Bei solchen Backpapierspendern kann das Vereinzeln von aus dem Spendergehäuse herauszuziehenden Backpapierbogen schwierig sein. Die Kräfte, die beim Herausziehen des obersten Backpapierbogens auf benachbarte Backpapierbogen wirken, können dazu führen, dass nebst dem obersten Backpapierbogen noch ein oder mehrere weitere Backpapierbogen aus dem Spendergehäuse herausgezogen werden.

Eine Aufgabe der Erfindung liegt darin, einen ergonomischen Backpapierspender zu schaffen der ein einfaches Entnehmen einzelner Backpapierbogen ermöglicht.

Diese Aufgabe wird gelöst durch einen Backpapierspender mit den Merkmalen des Patentanspruchs 1.

Der Backpapierspender umfasst ein Spendergehäuse, das vorzugsweise als Faltschachtel aus Karton oder Wellpappe gefertigt ist. Solche Spendergehäuse können einfach und kostengünstig in unterschiedlichen Ausführungsformen hergestellt werden. Sie haben in der Regel auch die Funktion einer schützenden Verpackung, die sich nicht nur als Spendergehäuse am jeweiligen Verwendungsort, sondern auch zum Lagern und Transportieren der Backpapierbogen eignet. Form und Grösse können einfach und kostengünstig an unterschiedliche Anforderungen angepasst werden. Typische Abmessungen von Backpapierbogen, wie sie in Bäckereien und Gastrobetrieben verwendet werden, sind z.B. etwa 64cm x 52cm oder etwa 53cm x 32.5cm.

Spendergehäuse können in unterschiedlichen Ausführungsformen dazu ausgebildet sein, Backpapierbogen ohne oder mit einfach oder mehrfach umgeschlagenen Bereichen aufzunehmen. Länge und Breite von Spendergehäusen, in denen Backpapierstapel ohne Umschlag gelagert werden, sind in der Regel ein wenig grösser als die Länge und Breite der Backpapierbogen. Die von solchen Spendergehäusen beanspruchte Fläche ist vergleichsweise gross, deren Höhe jedoch eher klein.

Weitere Spendergehäuse können dazu ausgebildet sein, Backpapierstapel ein- oder mehrfach umgeschlagen zu lagern. Die Länge solcher Spendergehäuse kann entsprechend der Anzahl Umschläge des Backpapierstapels deutlich kleiner sein als die Länge der Backpapierbögen und die Höhe kann deutlich grösser sein als die Höhe des Backpapierstapels. Die Breite solcher Spendergehäuse ist in der Regel die längste Abmessung des Spendergehäuses. Sie entspricht im Wesentlichen der Breite der Backpapierbögen bzw. ist etwas grösser als diese.

Spendergehäuse umfassen eine Wandung, die einen Gehäuseboden, eine Gehäusedecke, zwei Seitenwände, eine Vorderwand und eine Rückwand umfasst, wobei die Wandung einen Aufnahmeraum begrenzt, in dem ein Backpapierstapel aus gestapelten Backpapierbogen angeordnet ist. Die Wandung umfasst eine Entnahmeöffnung zum Entnehmen von Backpapierbogen aus dem Spendergehäuse. Die Entnahmeöffnung kann z.B. vor der ersten Verwendung des Backpapierspenders durch ein teilweise oder vollständig von angrenzenden Bereichen trennbares Deckelement überdeckt sein, insbesondere durch einen Abschnitt der Gehäusedecke, der entlang von Perforationslinien mit angrenzenden Bereichen des Spendergehäuses verbunden ist und teilweise oder vollständig von diesen angrenzenden Bereichen des Spendergehäuses getrennt werden kann. Solche Deckelemente haben die Funktion eines Erstnutzungsschutzes. Solange die Deckelemente nicht teilweise oder vollständig von angrenzenden Abschnitten der Spendergehäuse getrennt worden sind, können diese Spendergehäuse als Packungen zum geschützten Lagern und Transportieren der Backpapierbogen verwendet werden. Bei einigen Ausführungsformen des Spendergehäuses kann das Deckelement als aufklappbarer und wieder schliessbarer Deckel ausgebildet sein, wobei es um einen parallel zwischen dem vorderen und dem hinteren Rand der Gehäusedecke ausgebildeten Falz schwenkbar am hinteren Abschnitt der Gehäusedecke angelenkt ist.

Die Entnahmeöffnung ist vorzugsweise angrenzend an eine obere Vorderkante des Spendergehäuses an der Gehäusedecke oder an der Vorderwand angeordnet. Dazu benachbart umfasst das Spendergehäuse einen Entnahmeboden, auf dem zumindest ein Endabschnitt des Backpapierstapels benachbart zur Entnahmeöffnung unterhalb oder hinter dieser Entnahmeöffnung aufliegt. Angrenzend an die Entnahmeöffnung und den Entnahmeboden umfasst das Spendergehäuse einen ersten Anschlag mit einer ersten Anschlagfläche, welche die Lage der vorderen Ränder bzw. Kanten der Backpapierbogen definiert. Diese erste Anschlagfläche grenzt in einem vorderen Randbereich an den Entnahmeboden an und ist relativ zu einer Vertikalebene zum Entnahmeboden leicht nach vorne geneigt, z.B. mit einem Neigungswinkel in der Grössenordnung von etwa 5° bis etwa 45°, vorzugsweise im Bereich von etwa 10° bis etwa 30°. Dadurch werden die Backpapierbogen im Stapel leicht aufgefächert. Die erste Anschlagfläche definiert eine Rampe, die gegenüber dem Entnahmeboden oder dem Gehäuseboden mit einem Steigungswinkel im Bereich von etwa 45° bis etwa 85° angeordnet sein kann.

Der erste Anschlag umfasst im Bereich der ersten Anschlagfläche eine nach oben offene Ausnehmung. Diese Ausnehmung ist bei Ausführungsformen des Spendergehäuses mit obenliegender Entnahmeöffnung eine Greiföffnung, die das Entnehmen von Backpapierbogen aus dem Spendergehäuse erleichtert. Falls der Anschlag bzw. die Anschlagfläche nicht direkt an der Vorderwand des Spendergehäuses, sondern beabstandet dazu angeordnet sind, kann zusätzlich auch die Vorderwand eine entsprechende Ausnehmung als Greiföffnung umfassen.

Die Greiföffnung ist in der Regel weniger breit als etwa ein Drittel der Breite des Spendergehäuses und erstreckt sich vorzugsweise vom oberen Rand der Vorderwand bis zum Entnahmeboden oder bis zu einer Höhe über dem Entnahmeboden, die etwa zwischen einem Viertel und drei Vierteln des Niveauunterschieds zwischen dem oberen Rand der Vorderwand und dem Entnahmeboden liegt.

Bei Ausführungsformen des Spendergehäuses mit einer Entnahmeöffnung, die an der Vorderwand angeordnet ist, ist diese Entnahmeöffnung die Ausnehmung beim ersten Anschlag. Vorzugsweise ist die Breite solcher Entnahmeöffnungen angrenzend an den oberen Rand der Vorderwand grösser als darunter. Dadurch wird sichergestellt, dass die gestapelten Backpapierbogen durch die ersten Anschlagflächen sicher im Spendergehäuse zurückgehalten werden, und dass der oberste Backpapierbogen trotzdem leicht aus dem Spendergehäuse herausgezogen werden kann. Beim oberen Rand der Vorderwand kann die Breite der Entnahmeöffnung z.B. einen Wert haben, der zwischen 80% der Breite der Backpapierbogen und dem gegenseitigen Abstand der beiden Seitenwände des Spendergehäuses liegt. Die ersten Anlageflächen, welche die Ausnehmung bzw. die vorne am Spendergehäuse angeordnete Entnahmeöffnung seitlich begrenzen, können z.B. dreieckige oder trapezförmige Randabschnitte der Vorderwand oder einer hinter der Vorderwand angeordneten Innenwand sein. Diese seitlichen Randabschnitte sind relativ zum Gehäuseboden nach vorne geneigt, sodass sie beim Herausziehen von Backpapierbogen aus dem Spendergehäuse als Rampen zum Führen dieser Backpapierbogen verwendet werden können. Die Ränder solcher Rampen, welche die Entnahmeöffnung begrenzen, können auch konkav und/oder konvex gekrümmte Abschnitte umfassen.

Bei Spendergehäusen mit einer an der Vorderwand angeordneten Entnahmeöffnung kann die Gehäusedecke am vorderen Rand eine Ausnehmung als Greiföffnung umfassen, die das Ergreifen des obersten Backpapierbogens erleichtert.

Die folgenden Erläuterungen beziehen sich auf Spendergehäuse, bei denen die Entnahmeöffnung an der Gehäusedecke angeordnet ist. Sinngemäss gelten diese Ausführungen auch bei Spendergehäusen, bei denen Entnahmeöffnungen an der Vorderwand und/oder an der ersten Anschlagfläche angeordnet sind, wobei die vertauschte Anordnung von Entnahmeöffnung und Greiföffnung zu berücksichtigen ist.

Die Greiföffnung ist mit der Entnahmeöffnung verbunden und erweitert diese in den Bereich der ersten Anschlagfläche und/oder der Vorderwand. Der oberste der aufgefächerten Backpapierbogen kann im Bereich der Greiföffnung und der Entnahmeöffnung einfach von oben und von vorne ergriffen und vereinzelt durch die Entnahmeöffnung aus dem Spendergehäuse herausgezogen werden. Solche Greiföffnungen können sich vom oberen Rand der Anschlagfläche her zumindest näherungsweise bis zum Entnahmeboden erstrecken. Dadurch können die jeweils obersten Backpapierbogen eines Stapels auch dann noch leicht ergriffen werden, wenn sich nur noch wenige Backpapierbogen auf dem Stapel befinden.

Vorzugsweise umfasst das Spendergehäuse Rückhaltemittel, welche verhindern, dass beim Herausziehen des obersten Backpapierbogens aus dem Spendergehäuse weitere Backpapierbogen mitgerissen werden. Solche Rückhaltemittel können insbesondere Abschnitte der Gehäusedecke umfassen, welche die gestapelten Backpapierbogen in den vorderen Eckbereichen überdecken. Beim Herausziehen eines Backpapierbogens durch die Entnahmeöffnung aus dem Spendergehäuse wirken die Eckbereiche der Gehäusedecke als Hindernis und als Widerstand für die Backpapierbogen. Aufgrund der auf den obersten Backpapierbogen wirkenden Auszugskraft werden dessen vordere Eckbereiche durch den Widerstand der Rückhaltemittel umgebogen, sodass sie das Hindernis passieren können. Backpapierbogen sind ausreichend biegeschlaff, sodass sie beim Umbiegen an den Hindernissen nicht beschädigt werden. Weitere Backpapierbogen werden durch die Rückhaltemittel wirksam im Spendergehäuse zurückgehalten.

Analog zum ersten Anschlag mit der ersten Anschlagfläche kann das Spendergehäuse einen zweiten Anschlag mit einer zweiten Anschlagfläche umfassen, welche die Lage der hinteren Ränder bzw. Kanten der Backpapierbogen definiert. Die Lage und die Neigung der zweiten Anschlagfläche sind abhängig davon, wie der Backpapierstapel im Spendergehäuse gelagert ist. Sie werden so festgelegt, dass die hinteren Ränder bzw. Kanten der Backpapierbogen an der zweiten Anschlagfläche anliegen, wenn die vorderen Ränder bzw. Kanten der Backpapierbogen an der ersten Anschlagfläche anliegen. In der Regel ist die zweite Anschlagfläche hinten oder vorne im Spendergehäuse angrenzend an den Gehäuseboden angeordnet.

Die erste Anschlagfläche kann direkt die Vorderwand des Spendergehäuses sein. Bei alternativen Ausführungsformen kann die erste Anschlagfläche auch innerhalb des Spendergehäuses angeordnet sein, vorzugsweise angrenzend an eine Vorderkante der Entnahmeöffnung. Vorzugsweise umfasst die Gehäusewandung bei solchen Ausführungsformen zusätzlich zur Greiföffnung am vorderen Anschlag eine Aussparung als weitere Greiföffnung, welche den stirnseitigen Zugang zu den aufgefächerten Backpapierbogen durch die Greiföffnung am vorderen Anschlag freilegt. Solche Aussparungen können an der Vorderwand des Spendergehäuses und/oder an der Gehäusedecke angeordnet sein.

Der Gestaltungsspielraum bei Spendergehäusen kann dadurch wesentlich vergrössert werden. Gestalt und Grösse von Spendergehäusen können deshalb einfach individuell an unterschiedliche Anforderungen angepasst werden.

Spendergehäuse in unterschiedlichen Ausführungsformen können dazu ausgebildet sein, Backpapierstapel einlagig oder mehrlagig aufzunehmen.

Spendergehäuse, in denen Backpapierstapel einlagig bzw. nicht umgeschlagen gelagert sind, haben eine Grundfläche, die leicht grösser ist als die Fläche der gestapelten Backpapierbogen. Die Höhe solcher Spendergehäuse ist in der Regel nur unwesentlich grösser als die Höhe der darin gelagerten Backpapierstapel. Sie kann beispielsweise in der Grössenordnung von etwa 15mm bis etwa 50mm liegen, z.B. im Bereich von 25mm bis 35mm, und insbesondere etwa 30mm betragen. Die Vorderwand und die Rückwand können gegenüber einer Orthogonalebene zum Gehäuseboden nach vorne geneigt sein, sodass die Seitenwände des Spendergehäuses die Form eines Rhomboids haben. Alternativ können solche Spendergehäuse aussen quaderförmig ausgebildet sein, wobei die erste Anschlagfläche und/oder die zweite Anschlagfläche im Inneren des Spendergehäuses angeordnet sind. Der Gehäuseboden ist identisch mit dem Entnahmeboden oder umfasst den Entnahmeboden, auf dem der Backpapierstapel zumindest im Bereich der Entnahmeöffnung aufliegt.

Bei weiteren Ausführungsformen können Backpapierstapel im Inneren des Gehäuses einfach U-förmig um eine stabile Einlage umgeschlagen oder zweifach S-förmig um zwei stabile Einlagen umgeschlagen im Spendergehäuse gelagert sein. Dadurch kann die Grundfläche des Spendergehäuses wesentlich verkleinert werden. Vorzugsweise sind eine oder beide Einlagen Abschnitte einer Faltschachtel aus Karton oder Wellpappe. Alternativ könnten solche Einlagen auch lose bzw. nicht mit der Faltschachtel verbundene Flächengebilde sein, insbesondere solche aus Karton oder Wellpappe.

Bei Spendergehäusen mit einem einfach umgeschlagenen Backpapierstapel kann die stabile Einlage, um die der Backpapierstapel umgeschlagen ist, der Entnahmeboden sein, der etwa auf halber Höhe des Spendergehäuses angeordnet ist, an die Vorderwand angrenzt, und vorzugsweise einen nach unten abgekanteten Abschnitt als zweiten Anschlag für die hinteren Kanten der Backpapierbogen umfasst.

Bei Spendergehäusen mit einem zweifach umgeschlagenen Backpapierstapel kann eine erste stabile Einlage, um die der obere Abschnitt des Backpapierstapels umgeschlagen ist, der Entnahmeboden sein, der etwa auf zwei Drittel der Höhe des Spendergehäuses angeordnet ist und an dessen Vorderwand angrenzt. Eine weitere stabile Einlage kann etwa auf einem Drittel der Höhe des Spendergehäuses angeordnet sein und direkt oder indirekt über die zweite Anschlagfläche an die Rückwand des Spendergehäuses angrenzen.

Im Folgenden werden einige Ausführungsformen der Erfindung anhand von Figuren näher erläutert. Dabei zeigen
Anhand einiger Figuren wird die Erfindung nachfolgend näher erläutert. Dabei zeigen
- Figur 1: einen ersten Backpapierspender in perspektivischer Darstellung,
- Figur 2: den aufgeschnittenen Backpapierspender aus Figur 1 mit freigelegter Entnahmeöffnung,
- Figur 3: eine Seitenansicht des Backpapierspenders aus Figur 1,
- Figur 4: einen Längsschnitt eines zweiten Backpapierspenders,
- Figur 5: den aufgeschnittenen Backpapierspender aus Figur 4 in einer perspektivischen Darstellung,
- Figur 6: einen weiteren Backpapierspender in perspektivischer Darstellung,
- Figur 7: den Backpapierspender aus Figur 6 mit freigelegter Entnahmeöffnung,
- Figur 8: den aufgeschnittenen Backpapierspender aus Figur 6 mit freigelegter Entnahmeöffnung,
- Figur 9: eine Seitenansicht des aufgeschnittenen Backpapierspenders aus Figur 8,
- Figur 10: einen weiteren aufgeschnittenen Backpapierspender in perspektivischer Darstellung,
- Figur 11: eine Seitenansicht des aufgeschnittenen Backpapierspenders aus Figur 10.

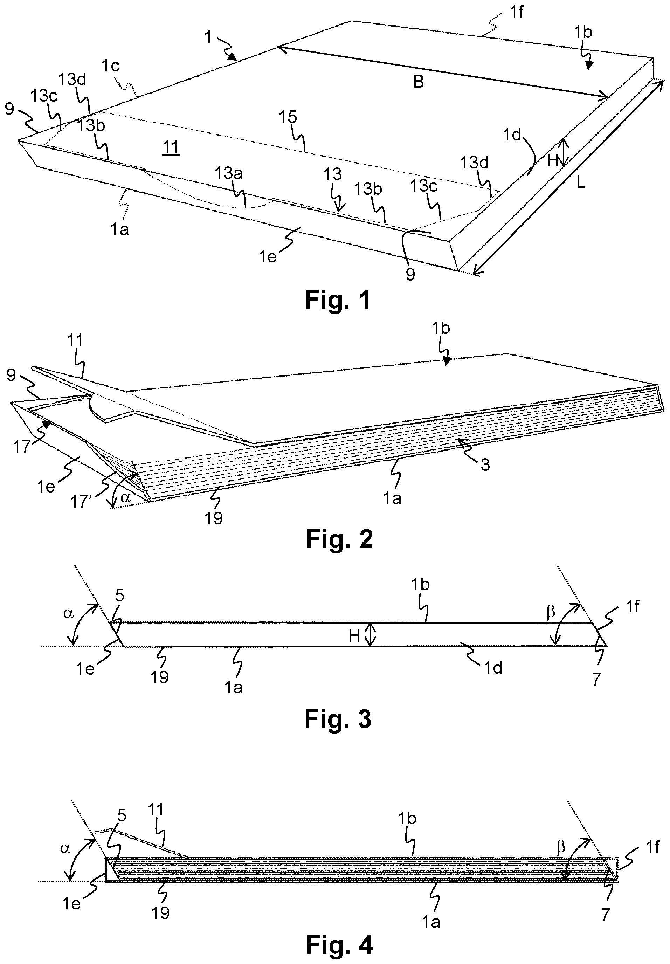

Figur 1 zeigt ein geschlossenes Spendergehäuse 1 eines ersten Backpapierspenders. Es umfasst eine Faltschachtel mit einer Wandung aus einem Gehäuseboden 1a, einer Gehäusedecke 1b, zwei Seitenwänden 1c, 1d, einer Vorderwand 1e und einer Rückwand 1f. Der Gehäuseboden 1a und die Gehäusedecke 1b sind im Wesentlichen rechteckig und haben eine Länge L und eine Breite B, die im Wesentlichen den um einen Zuschlag ergänzten Längen und der Breiten von Backpapierbogen entsprechen, die im Spendergehäuse 1 gelagert werden. Der Zuschlag kann z.B. in der Grössenordnung von etwa 5mm bis etwa 20mm liegen. Er kann insbesondere unter Berücksichtigung der Wandungsdicken des Spendergehäuses 1 und von Toleranzen so festgelegt werden, dass die Backpapierbogen mit nur geringem Spiel im Spendergehäuse 1 gelagert werden können. Die Vorderwand 1e und die Rückwand 1f sind ebenfalls im Wesentlichen rechteckige Abschnitte der Faltschachtel. In Figur 2 ist das der Länge nach aufgeschnittene Spendergehäuse 1 perspektivisch dargestellt, und Figur 3 zeigt das Spendergehäuse 1 in einer Seitenansicht. Die Seitenwände 1c, 1d haben die Form eines Rhomboids, wobei die Vorderwand 1e gegenüber der Ebene des Gehäusebodens 1a unter einem Steigungswinkel α geneigt ist, der vorzugsweise grösser als 45° und kleiner als 85° ist und beispielsweise etwa 60° beträgt. Die Rückwand 1f ist parallel zur Vorderwand 1e angeordnet. Ihr Steigungswinkel β gegenüber der Ebene des Gehäusebodens 1a ist somit gleich gross wie der Steigungswinkel α. Im Spendergehäuse 1 ist ein Backpapierstapel 3 mit gestapelten Backpapierbogen gelagert, wobei die Vorderkanten der Backpapierbogen entlang der Innenseite der Vorderwand 1e angeordnet sind, und die Hinterkanten der Backpapierbogen entlang der Innenseite der Rückwand 1f. Die Vorderwand 1e definiert einen ersten Anschlag, wobei ihre Innenseite eine erste Anschlagfläche 5 für die Vorderkanten der Backpapierbogen ist. Diese sind im Spendergehäuse 1 entsprechend der Neigung der Vorderwand 1e aufgefächert gelagert. Gleiches gilt für die Rückwand 1f, die als zweiter Anschlag mit einer zweiten Anschlagfläche 7 für die Hinterkanten der Backpapierbogen dient.

Die Höhe H des Spendergehäuses 1 kann entsprechend der Höhe eines aufzunehmenden Backpapierstapels so vorgegeben sein, dass dieser Backpapierstapel unter Berücksichtigung von Wandungsdicken des Spendergehäuses 1, gegebenenfalls von zusätzlichen Einlagen sowie von Toleranzen einlagig oder alternativ mehrlagig um eine bzw. mehrere Einlagen umgeschlagen vorzugsweise mit nur geringem Spiel im Spendergehäuse 1 gelagert werden kann.

Das Spendergehäuse 1 umfasst an der Gehäusedecke 1b eine Entnahmeöffnung 17. Diese kann z.B. vor der ersten Nutzung durch einen vollständig abtrennbaren oder durch einen bereichsweise trennbaren und aufklappbaren Deckabschnitt 11 der Gehäusedecke 1b überdeckt bzw. verschlossen sein. Beim in den Figuren 1 bis 3 dargestellten Spendergehäuse 1 kann der Deckabschnitt 11 entlang einer Perforationslinie 13 von angrenzenden Bereichen der Gehäusedecke 1b und der Vorderwand 1e getrennt werden. Die Perforationslinie 13 umfasst zwei entlang der oberen Vorderkante des Spendergehäuses 1 angeordnete gerade Abschnitte 13b, 13c, die durch einen dazwischenliegenden Kreisabschnitt 13a an der Vorderwand 1e miteinander verbunden und beabstandet zu den vorderen Ecken der Gehäusedecke 1b über zwei schräge Verbindungsabschnitte 13c mit entlang der Seitenkanten der Gehäusedecke 1b angeordneten Endabschnitten 13d verbunden sind. Die hinteren Enden dieser Endabschnitte 13d sind über einen parallel zum vorderen Rand der Gehäusedecke 1b angeordneten Falz 15 miteinander verbunden. Vor der ersten Nutzung des Backpapierspenders ist der Deckabschnitt 11, wie in Figur 1 dargestellt, im Bereich der Perforationslinie 13 mit den angrenzenden Bereichen der Wandung des Spendergehäuses 1 verbunden, sodass das Spendergehäuse 1 als Lager- und Transportbehälter für die Backpapierbogen nutzbar ist. Nach dem Trennen entlang der Perforationslinie 13 ist der Deckabschnitt 11 nur noch entlang des Falzes 15 mit dem angrenzenden Bereich der Gehäusedecke 1b verbunden. Der Deckabschnitt 11 ist bei diesem Spendergehäuse 1 ein Klappdeckel, und der Falz 15 ist ein Scharnier zum Auf-und Zuklappen des Klappdeckels, um eine Entnahmeöffnung 17 an der Gehäusedecke 1b freizulegen und wieder zu schliessen. Der angrenzend an den Kreisabschnitt 13a der Perforationslinie 13 an der Vorderwand 1e freigelegte Bereich erweitert die Entnahmeöffnung 17 und wird auch als Greiföffnung 17' bezeichnet. Im Bereich der Greiföffnung 17' werden die Vorderkanten der aufgefächerten Backpapierbogen freigelegt. Dadurch kann der oberste Backpapierbogen einfach von oben und von vorne ergriffen und durch die Entnahmeöffnung 17 aus dem Spendergehäuse 1 herausgezogen werden. Die Grösse und die Form der Greiföffnung 17' können unterschiedlich vorgegeben werden. Die Greiföffnung 17' kann sich über die gesamte Höhe der Vorderwand 1e erstrecken. Vorzugsweise umfasst die Vorderwand 1e jedoch unterhalb der Greiföffnung 17' zwischen den Seitenwänden 1c, 1d einen nicht unterbrochenen durchgehenden Abschnitt. Dadurch kann die Stabilität des Spendergehäuses 1 verbessert werden.

Der Backpapierstapel 3 liegt benachbart zur Entnahmeöffnung 17 auf einem Entnahmeboden 19 auf. Bei der in den Figuren 1 bis 3 dargestellten Ausführungsform des Spendergehäuses 1 ist der Entnahmeboden 19 identisch mit dem Gehäuseboden 1a.

Die Gehäusedecke 1b umfasst in den vorderen Eckbereichen an die Entnahmeöffnung 17 angrenzende Abschnitte, die allgemein als Rückhaltemittel 9 bezeichnet werden. Sie haben die Funktion, beim Herausziehen des obersten Backpapierbogens durch die Entnahmeöffnung 17 aus dem Spendergehäuse 1 ein Hindernis bzw. einen Widerstand für die Endbereiche der Vorderkanten der Backpapierbogen bereitzustellen. Durch Ausüben einer Auszugskraft auf den obersten Backpapierbogen werden dessen vordere Eckbereiche umgebogen, sodass er das Hindernis überwinden und aus dem Spendergehäuse 1 herausgezogen werden kann. Die restlichen Backpapierbogen werden jedoch durch die Rückhaltemittel 9 im Spendergehäuse 1 zurückgehalten.

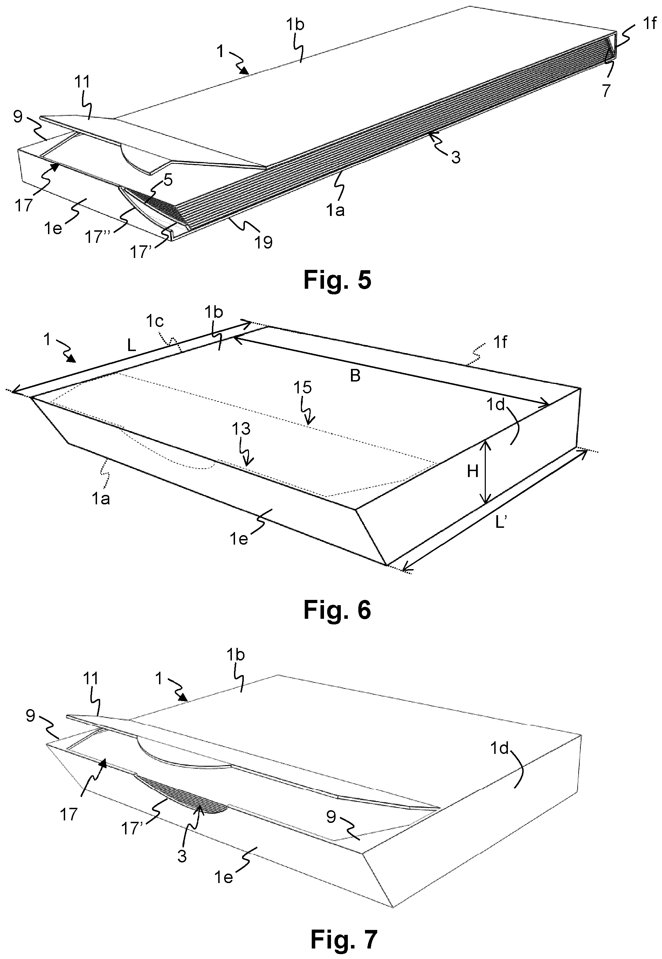

Die Figuren 4 und 5 zeigen einen aufgeschnittenen zweiten Backpapierspender in einer Seitenansicht. Im Unterschied zum ersten Backpapierspender hat das Spendergehäuse 1 aussen die Gestalt eines Quaders. Die Anschläge mit der ersten Anschlagfläche 5 und der zweiten Anschlagfläche 7 sind nicht an der Vorderwand 1e bzw. der Rückwand 1f des Spendergehäuses 1 angeordnet, sondern an gegenüber dem Gehäuseboden 1a unter einem Steigungswinkel α bzw. β geneigten Innenwänden des Spendergehäuses 1. Figur 5 zeigt in einer perspektivischen Darstellung als weiteres Detail, dass die Vorderwand 1e benachbart zur Greiföffnung 17' an der vorderen Innenwand ebenfalls eine Greiföffnung 17" umfasst, sodass die Vorderkanten der Backpapierbogen zum Herausziehen des obersten Backpapierbogens leicht zugänglich sind.

Figur 6 zeigt einen dritten Backpapierspender mit einem Spendergehäuse 1 im ungeöffneten Originalzustand. Im Unterschied zum ersten Spendergehäuse 1 gemäss Figur 1 ist dieses Spendergehäuse 1 dazu ausgebildet, einen Backpapierstapel 3 aufzunehmen, der einfach U-förmig um eine erste Einlage im Inneren des Spendergehäuses 1 umgeschlagen ist. Die Seitenwände 1c, 1d haben die Form eines rechtwinkligen Trapezes, wobei die Länge L' des Gehäusebodens 1a kürzer ist als die Länge L der Gehäusedecke 1b, und wobei die Vorderwand 1e um einen Steigungswinkel α relativ zum Gehäuseboden 1a geneigt ist. Die Längen L, L' sind näherungsweise halb so gross, wie die Länge L des ersten Backpapierspenders gemäss Figur 1, und die Höhe H ist näherungsweise doppelt so gross wie die Höhe H des ersten Backpapierspenders.

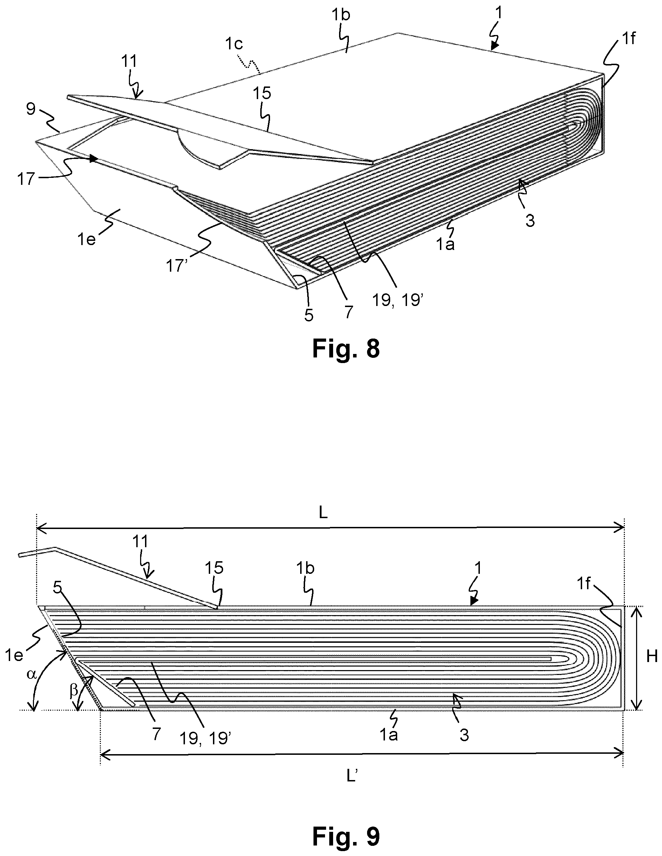

Figur 7 zeigt diesen dritten Backpapierspender, wobei der Deckabschnitt 11 aufgeklappt und die Entnahmeöffnung 17 freigelegt sind. Die Figuren 8 und 9 zeigen eine perspektivische Ansicht und eine Seitenansicht des in Längsrichtung aufgeschnittenen Backpapierspenders aus Figur 7. Etwa auf halber Höhe erstreckt sich ein Zwischenboden 19' von der Vorderwand 1e her ins Gehäuseinnere. Das hintere Ende dieses Zwischenbodens 19' ist beabstandet zur Rückwand 1f, und der Backpapierstapel 3 ist um diesen Zwischenboden 19' umgeschlagen im Spendergehäuse 1 gelagert. Der obere bzw. vordere Endabschnitt des Backpapierstapels 1 liegt unterhalb der Entnahmeöffnung 17 auf dem Zwischenboden 19' auf. Dieser Zwischenboden 19' ist somit zugleich ein Entnahmeboden 19 und eine Einlage, um die der Backpapierstapel 3 umgeschlagen ist. Unten angrenzend an den Entnahmeboden 19 und innen angrenzend an die Vorderwand 1e des Spendergehäuses 1 ragt z.B. ein abgewinkelter Endabschnitt des Entnahmebodens 19 als zweiter Anschlag mit einer zweiten Anschlagfläche 7 nach unten bis zum Gehäuseboden 1a. Er ist gegenüber dem Gehäuseboden 1a mit einem Steigungswinkel β geneigt, wobei dieser Steigungswinkel β kleiner ist als der Steigungswinkel α der Vorderwand 1e, welche die erste Anschlagfläche 5 für die Vorderkanten der Backpapierbogen bildet. Der Steigungswinkel β ist so bemessen, dass die Hinterkanten der umgeschlagenen Backpapierbogen an der ersten Anschlagfläche 5 und an der zweiten Anschlagfläche 7 anliegen.

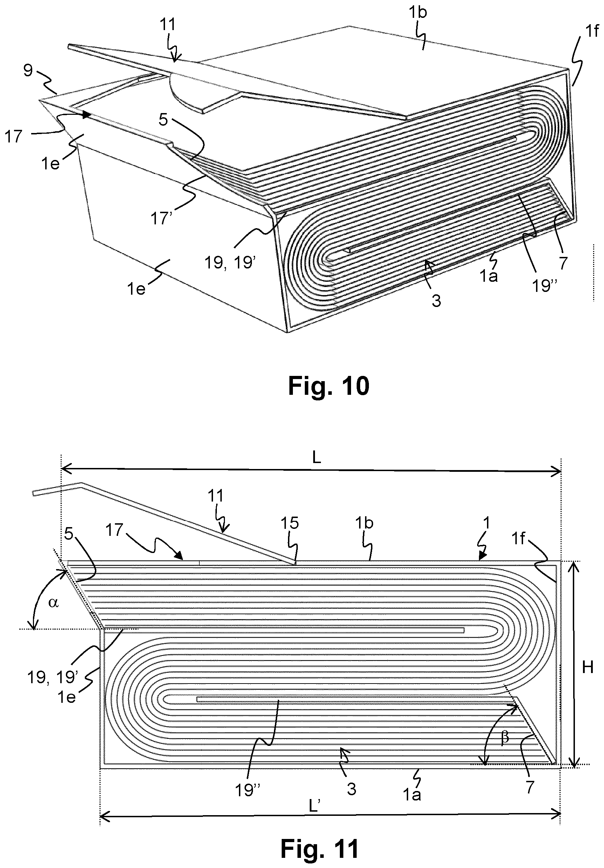

Die Figuren 10 und 11 zeigen einen aufgeschnittenen vierten Backpapierspender mit geöffnetem Deckabschnitt 11 bzw. mit freigelegter Entnahmeöffnung 17 in einer perspektivischen Darstellung und in einer Seitenansicht.

Im Unterschied zum ersten Spendergehäuse 1 gemäss Figur 1 ist dieses Spendergehäuse 1 dazu ausgebildet, einen Backpapierstapel 3 aufzunehmen, der zweifach umgeschlagen im Inneren des Spendergehäuses 1 gelagert ist, nämlich S-förmig um eine erste Einlage und eine zweite Einlage.

Die Länge L der Gehäusedecke 1b und die Länge L' des Gehäusebodens 1a betragen näherungsweise einen Drittel der entsprechenden Längen L, L' beim ersten Spendergehäuse 1, wobei die Länge L der Gehäusedecke 1b etwas grösser ist als die Länge L' des Gehäusebodens 1a. Das Spendergehäuse 1 hat etwa im obersten Drittel in Seitenansicht die Form eines rechtwinkligen Trapezes, wobei ein oberer Abschnitt der Vorderwand 1e nach vorne geneigt angeordnet ist. Im darunter anschliessenden Abschnitt hat das Spendergehäuse 1 in Seitenansicht die Form eines Rechtecks. Die Höhe H des vierten Spendergehäuses 1 ist näherungsweise drei Mal so gross wie jene des ersten Spendergehäuses 1.

Etwa auf zwei Dritteln der Höhe H über dem Gehäuseboden 1a erstreckt sich vom unteren Ende des nach vorne geneigten Abschnitts der Vorderwand 1e her ein Zwischenboden 19' ins Gehäuseinnere. Das hintere Ende dieses Zwischenbodens 19' ist beabstandet zur Rückwand 1f, und der Backpapierstapel 3 ist um diesen Zwischenboden 19' umgeschlagen im Spendergehäuse 1 gelagert. Der obere bzw. vordere Endabschnitt des Backpapierstapels 1 liegt unterhalb der Entnahmeöffnung 17 auf dem Zwischenboden 19' auf. Dieser Zwischenboden 19' ist somit zugleich ein Entnahmeboden 19 und eine Einlage, um die der Backpapierstapel 3 umgeschlagen ist. Dieser Entnahmeboden 19 kann als Teil der Faltschachtel mit der Vorderwand 1e und/oder den Seitenwänden 1c, 1d verbunden sein. Dadurch wird sichergestellt, dass er zumindest angrenzend an die Vorderwand 1e seine Höhenlage unabhängig von der Anzahl Backpapierbogen des Backpapierstapels 3 beibehält. Alternativ könnte der Entnahmeboden 19 an die Seitenwände 1c, 1d und/oder an die Vorderwand 1e angrenzende, nach unten gefaltete Abschnitte umfassen, die z.B. auf dem Gehäuseboden 1a abgestützt werden können, um den Entnahmeboden 19 in einer definierten Lage zu halten. Dies gilt sinngemäss auch für andere Ausführungsformen des Backpapierspenders, die einen oberhalb des Gehäusebodens 1a angeordneten Entnahmeboden 19 umfassen.

Im obersten Drittel zwischen dem Entnahmeboden 19 und dem vorderen Rand der Gehäusedecke 1b ist die Vorderwand 1e gegenüber der Ebene des Entnahmebodens 19 und gegenüber der Ebene des Gehäusebodens 1a unter einem Steigungswinkel α geneigt, der vorzugsweise grösser als 45° und kleiner als 85° ist und beispielsweise etwa 60° beträgt. Die Innenseite der Vorderwand 1e ist in diesem Bereich eine erste Anlagefläche 5, an der die Vorderkanten der Backpapierbogen anliegen.

Etwa auf einem Drittel der Höhe H des Spendergehäuses 1 erstreckt sich ein weiterer Zwischenboden 19" von der Rückwand 1f her ins Gehäuseinnere. Das vordere Ende dieses Zwischenbodens 19" ist beabstandet zur Vorderwand 1e, und der Backpapierstapel 3 ist um diesen weiteren Zwischenboden 19" umgeschlagen im Spendergehäuse 1 gelagert. Unten angrenzend an den Zwischenboden 19" ragt z.B. ein abgewinkelter Endabschnitt des Zwischenbodens 19" als zweiter Anschlag mit einer zweiten Anschlagfläche 7 nach hinten und nach unten bis in den Eckbereich von Gehäuseboden 1a und Rückwand 1f. Die zweite Anschlagfläche 7 ist gegenüber dem Gehäuseboden 1a mit einem Steigungswinkel β geneigt, wobei dieser Steigungswinkel β näherungsweise gleich gross ist wie der Steigungswinkel α der Vorderwand 1e, oberhalb des Entnahmebodens 19. Der Steigungswinkel β ist so bemessen, dass die Hinterkanten der umgeschlagenen Backpapierbogen an der ersten Anschlagfläche 5 und an der zweiten Anschlagfläche 7 anliegen. Der Zwischenboden 19" kann analog zum Entnahmeboden 19 mit den Seitenwänden 1c, 1d und/oder der Rückwand 1f verbunden und/oder mittels nach unten gefalteter Abschnitte auf dem Gehäuseboden 1a abgestützt sein.

Weitere Elemente wie z.B. die Rückhaltemittel 9, die Entnahmeöffnung 17 und die Greiföffnung 17' können bei allen Ausführungsformen vorgesehen sein, auch wenn sie vorherstehend nur für einzelne dieser Ausführungsformen beschrieben sind.

Bei weiteren Ausführungsformen des Spendergehäuses 1 (nicht dargestellt) kann die Entnahmeöffnung 17 an der Vorderwand 1e angeordnet sein. Daran angrenzend kann eine Greiföffnung 17' an der Gehäusedecke 1b angeordnet sein. Dies kann z.B. bei den vorhergehend beschriebenen Ausführungsformen von Spendergehäusen 1 durch Vergrössern der Greiföffnung 17' an der Vorderwand 1e und gegebenenfalls der Greiföffnung 17" an einer Innenwand, welche die erste Anschlagfläche 5 definiert, erreicht werden. Die Kontur der Ausnehmung an der Vorderwand 1e kann z.B. so vorgegeben sein, dass die Breite der Greiföffnung 17' unmittelbar angrenzend an die Gehäusedecke 1b im Wesentlichen dem Abstand der beiden Seitenwände 1c, 1d entspricht und sich darunter bis zu einem Niveau von z.B. 0 bis 15mm oberhalb des Entnahmebodens 19 kontinuierlich verkleinert. Die an die Ausnehmung angrenzenden geneigten Abschnitte der Vorderwand 1e oder einer entsprechenden Innenwand sind erste Anschlagflächen 5 für die Vorderkanten der Backpapierbogen. Sie haben aber auch die Funktion von Rückhaltemitteln 9, welche die gestapelten Backpapierbogen im Spendergehäuse 1 zurückhalten. Diese Wirkung wird ergänzt oder unterstützt durch die Gehäusedecke 1b.

## Patentansprüche

1. Backpapierspender, umfassend ein Spendergehäuse (1) mit einer Wandung, die einen Gehäuseboden (1a), eine Gehäusedecke (1b), zwei Seitenwände (1c, 1d), eine Vorderwand (1e) und eine Rückwand (1f) umfasst, wobei die Wandung einen Aufnahmeraum begrenzt, in dem ein Backpapierstapel (3) aus gestapelten Backpapierbogen angeordnet ist, wobei die Wandung eine Entnahmeöffnung (17) zum Entnehmen von Backpapierbogen aus dem Spendergehäuse (1) umfasst, wobei das Spendergehäuse (1) einen Entnahmeboden (19) umfasst, auf dem mindestens ein vorderer Endabschnitt des Backpapierstapels (3) benachbart zur Entnahmeöffnung (17) aufliegt, **dadurch gekennzeichnet, dass** das Spendergehäuse (1) einen ersten Anschlag mit einer an den Entnahmeboden (19) angrenzenden ersten Anschlagfläche (5) für die vorderen Kanten der Backpapierbogen umfasst, und dass die erste Anschlagfläche (5) eine Rampe definiert, die gegenüber der Ebene des Entnahmebodens (19) oder des Gehäusebodens (1a) mit einem Steigungswinkel (α) im Bereich von 45° bis 85° geneigt angeordnet ist.

2. Backpapierspender nach Anspruch 1, **dadurch gekennzeichnet, dass** die erste Anschlagfläche (5) an der Vorderwand (1e) oder an einer Innenwand des Spendergehäuses (1) angeordnet ist.

3. Backpapierspender nach einem der Ansprüche 1 oder 2, **dadurch gekennzeichnet, dass** das Spendergehäuse (1) einen zweiten Anschlag mit einer an den Gehäuseboden (1a) angrenzenden zweiten Anschlagfläche (7) für die hinteren Kanten der Backpapierbogen umfasst.

4. Backpapierspender nach einem der Ansprüche 1 bis 3, **dadurch gekennzeichnet, dass** das Spendergehäuse (1) an die Entnahmeöffnung angrenzende Rückhaltemittel (9) zum Zurückhalten von weiteren Backpapierbogen beim Herausziehen des obersten Backpapierbogens aus dem Spendergehäuse (1) umfasst.

5. Backpapierspender nach einem der Ansprüche 1 bis 4, **dadurch gekennzeichnet, dass** die Entnahmeöffnung (17) angrenzend an eine obere Vorderkante des Spendergehäuses (1) an der Gehäusedecke (1b) oder an der Vorderwand (1e) angeordnet ist.

6. Backpapierspender nach Anspruch 5, **dadurch gekennzeichnet, dass** eine die Entnahmeöffnung (17) erweiternde Greiföffnung (17') angrenzend an die obere Vorderkante des Spendergehäuses (1) angeordnet ist.

7. Backpapierspender nach Anspruch 6, wobei die Entnahmeöffnung (17) an der Gehäusedecke (1b) und die Greiföffnung (17') an der Vorderwand (1e) des Spendergehäuses (1) angeordnet sind, **dadurch gekennzeichnet, dass** die Entnahmeöffnung (17) und die Greiföffnung (17') vor der ersten Nutzung des Backpapierspenders durch einen entlang einer Perforationslinie (13) trennbaren Deckabschnitt (11) mit den angrenzenden Bereichen des Spendergehäuses (1) verbunden sind.

8. Backpapierspender nach Anspruch 7, **dadurch gekennzeichnet, dass** die Perforationslinie (13) zwischen Abschnitten am Vorderrand und Abschnitten an den Seitenrändern der Gehäusedecke (1b) entlang von schrägen Verbindungsabschnitten (13c) verläuft, sodass daran angrenzende vordere Eckbereiche der Gehäusedecke (1b) als Rückhaltemittel (9) zum Zurückhalten von Backpapierbogen im Spendergehäuse (1) nutzbar sind.

9. Backpapierspender nach einem der Ansprüche 1 bis 8, **dadurch gekennzeichnet, dass** der Entnahmeboden (19) ein Zwischenboden (19') ist, der zwischen dem Gehäuseboden (1a) und der Gehäusedecke (1b) angeordnet ist, und dass der Backpapierstapel (3) einfach um diesen Zwischenboden (19') umgeschlagen im Spendergehäuse (1) gelagert ist.

10. Backpapierspender nach Anspruch 9, **dadurch gekennzeichnet, dass** zwischen dem Entnahmeboden (19) und dem Gehäuseboden (1a) ein weiterer Zwischenboden (19") angeordnet ist, und dass der Backpapierstapel (3) umgeschlagen um den Entnahmeboden (19) und umgeschlagen um den weiteren Zwischenboden (19") im Spendergehäuse (1) gelagert ist.
